# EUROPEAN PATENT SPECIFICATION

(11) **EP 1 001 333 B1**
(45) Date of publication and mention of the grant of the patent: **07.04.2004**
(21) Application number: 99308904.4
(22) Date of filing: 09.11.1999
(51) Int. Cl.: G06F 3/12

(54) **Network printing**
Netzwerkdrucker
Imprimante de réseau

(30) Priority: 13.11.1998 SG 9804035
(43) Date of publication of application: 17.05.2000
(73) Proprietor: Hewlett-Packard Company, A Delaware Corporation, Palo Alto, CA 94304 (US)
(72) Inventor: Choo, Tse Huong, Bradley Stoke Bristol BS32 8AB (GB)
(74) Representative: Powell, Stephen David

(56) References cited:
- US-A- 5 699 495
- US-A- 5 802 260

## Description

This invention relates to sharing of a printing device which is directly coupled to a workstation across a network of workstations. In particular, the invention relates to a method and system for printing to the printing device, a system for controlling print-jobs intended for the printing device, and a method of notifying events occurring on the printing device.

Printers that are used with computers are available in a variety of forms. For example, a printer could be an impact printer, such as a dot-matrix or daisy-wheel printer, or it could be a non-impact printer, such as an inkjet or laser printer. Each type of printer has its own particular printing characteristics. Accordingly, when using a printer on a computer, it is customary to use a printer driver specific to that particular type or kind of printer. Upon initiating a printing job on a computer, the printer driver receives image data from an application running on the computer and converts this image data, by for example rendering, into print data suitable for the associated printer. Communication is typically handled by low-level input/output modules which directly access the parallel-port on which the printer is connected.

Modem printers, particularly inkjet printers, have printing characteristics which can be queried dynamically by the printer driver at the time of initiating a print-job. The results of these queries can affect the way a print-job is handled or rendered. For example, a colour inkjet printer that reports that its cyan ink-drops are relatively larger than its yellow ink-drops will need to have the printer driver compensate by using slightly fewer cyan ink-drops to achieve a desired shade of colour than might otherwise be the case.

A network is a system of computers and other equipment set up for sharing files, data and other resources such as printers and scanners. A LAN, or a local area network, in its smallest form may consist of two computer workstations that can communicate with each other. A larger LAN may connect members of a workgroup, such as an accounting department, where users have similar requirements for sharing data and resources.

It is known for printers to be shared on a network. These printers can be i) connected directly to a network using a print server device, or ii) directly coupled (attached) to a workstation that is in turn connected on a network.

i) When using a print server device, there are two basic network configurations: client-server printing and peer-to-peer printing.

Client-server printing is typically used in medium to large networks where dedicated computer servers are used to manage printing needs of many users. Client-server networks use network operating systems such as Novell Netware™ and Microsoft Windows™ NT Server 4.0.

Peer-peer printing is more suitable for smaller networks. On peer-peer networks, users configure their operating system (e.g. Microsoft Windows™ 95, Windows™ 98 or Windows™ NT 4.0) to print directly to the printer.

ii) When a printer is shared on a workstation, typically the printer is connected directly to the parallel port of the selected workstation (the server) and is shared out to the other workstations (the clients). The printer sharing facility is generally provided by the operating system running on the server workstation. For example, Microsoft Windows™ for Workgroups 3.11, Windows™ 95, 98 or NT 4.0 all provide a printer sharing facility. Sharing a printer in this configuration is a low cost, straightforward way to share a printer because it requires no additional hardware or software.

Alternatively, the printer may be attached to a dedicated server computer which runs a server operating system such as Novell Netware 3.12 or 4.11.

In general, print server devices are hardware devices which include comprehensive network interfacing so that various printing facilities are provided to users on the network. The printer-driver operating on the source workstation uses network protocols such ·as SNMP in order to communicate with the network interface of the networked printer.

In contrast, when a printer is shared on a workstation, the interfacing with the network is provided via the operating system. In many cases, this limited interfacing provides a restricted set of printing capabilities to other workstations users on the network. The present invention is concerned with printers configured in this way.

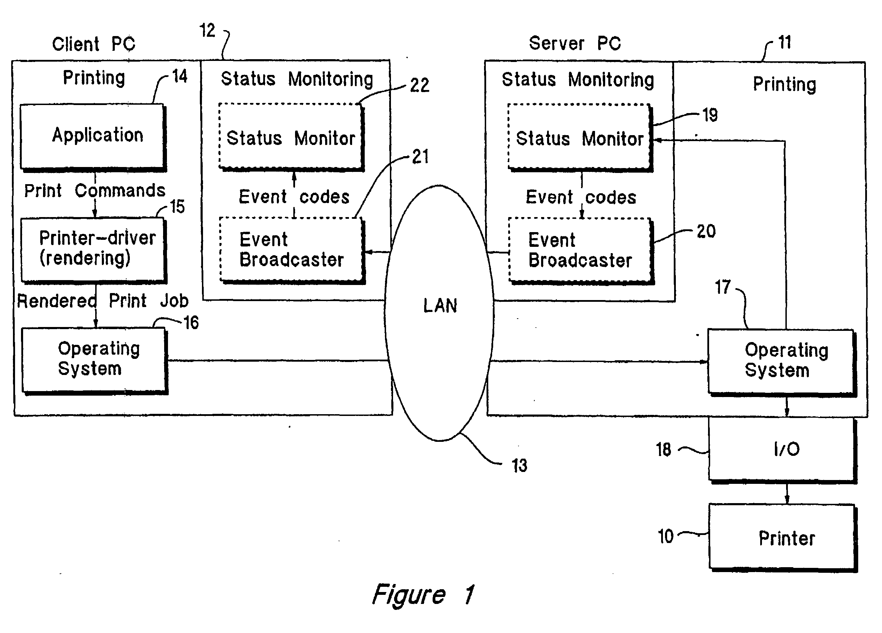

Figure 1 is a block diagram which illustrates a printer 10 shared on a server workstation 11 (in this case a personal computer or PC). The diagram also shows a client workstation 12 (also a PC) on which a print-job is generated, and routed to the printer over a LAN 13.

The print-job is initiated from an application 14 running on the client PC 12. The application 14 issues appropriate Print Commands to the Printer-driver 15 which include, amongst others, page layout data, text data, and graphics data. Collectively, these commands may be referred to as image data.

The printer driver 15 renders this image data into print data suitable for interpreting by the remote printer 10. The printer driver 15 negotiates with the operating system 16 of the client PC 12 to establish a network connection with the operating system 17 of the server PC 11 over the LAN 13. The rendered print job is then sent over this network connection to the remote printer 10 attached to the server PC 11 via its operating system 17 and low-level input/output module 18.

In this configuration, the printer driver 15 is not in direct communication with the printer 10. Accordingly, the printer characteristics of the remote printer 10, such as ink drop size, cannot be queried. Consequently, the printer driver 15 is forced to assign default values to the printer parameters. This results in sub-optimal printing in the printer which is undesirable.

Events occurring on the printer, such as paper out or paper jam, are referred to the operating system 17. The operating system 17 reacts, in appropriate circumstances, to halt the printing of a print-job. At the same time, the operating system 17 informs an optional status monitoring system operating on the server PC of the printer events. The status monitor 19 displays a message to a user concerning the event which has occurred on the printer 10. The event codes are also broadcast over the LAN via the event broadcaster 20. A similar event broadcaster 21 residing on the client PC listens for these event codes and passes them to a status monitor 22 also residing on the client PC. The status monitor 22 informs a user of the client PC of events occurring on the printer attached to the server PC. A drawback with this status monitoring system is that users are notified of all events occurring on all shared printers even though some users only make use of a few of the shared printers.

The document US-A-5 699 495 discloses a first workstation communicating with a second workstation over a network. When the first workstation issues a print request to the second workstation it first retrieves a printer driver from the second workstation, and using this print driver sends print data to the second workstation, which passes then on to a printer.

It is an object of the present invention to provide an improved system for printing to a shared printer. Further objects of the invention include providing an improved method of informing users of events occurring on a shared printer and an improved method of controlling print-jobs intended for a shared printer.

The invention as defined by the independent claims provides a system which enables dynamic querying of a shared printer on a first workstation from a second workstation on which a print job is generated. The invention improves over the prior art systems which only provide a non-dynamic status reporting system which passively reports events occurring on a shared printer.

According to a first aspect of the present invention there is provided a method for printing from a first workstation to a printing device directly coupled to a second workstation, in which the first and second workstations communicate over a computer network, the method comprising; receiving on the first workstation image data from an application operating on the first workstation, issuing a request from the first workstation to the second workstation to query the printing device for printing parameter information, returning the queried parameter information from the second workstation to the first workstation, rendering, on the first workstation, the image data in dependence on the parameter information into print data suitable for interpreting by the printing device, and sending the print data to the printing device via the second workstation.

According to a second aspect of the present invention there is provided a system for printing from a first workstation to a printing device directly coupled to a second workstation, the first and second workstations communicating over a computer network, the system comprising;
a first communication means on the first workstation and a second communication means on the second workstation, the first communication means being operable to issue a query request to the second communication means, and the second communication means being responsive to the request to query the printing device for printing parameter information and to send the parameter information to the first communication means, rendering means coupled to the first communication means for receiving parameter information of the printing device, the rendering means being operable to receive image data from an application operating on the first workstation and render the image data in dependence on the parameter information into print data suitable for interpreting by the printing device, and
an operating system for sending the print data to the printing device via the second workstation.

A method or system in accordance with the first and second aspects of the present invention has an advantage that the image data is rendered in dependence on parameter information that is dynamically queried from the printer. The rendering can therefore be optimised to the parameters of the printer, which in turn leads to improved printing quality.

In a preferred embodiment there is provided a method of notifying events on a printing device directly coupled to one workstation to other workstations in the computer network, the method comprising; registering workstations with the first workstation to make the printing device available for printing from the registered workstations, maintaining on the workstation a list of the registered workstations, and notifying events on the printing device only to the registered workstations.

This preferred embodiment has an advantage that only workstations that have registered with the printing device are informed of events occurring on the printing device. Users who do not use a certain printing device will tend not to register with that printing device. Consequently, those users will not receive unnecessary event notifications from the printing device. A method in accordance with this preferred embodiment also has an advantage of reducing the number of event notifications transmitted over the network. Accordingly, the event notifications are less likely to affect the performance of the network.

In a further preferred embodiment there is provided a system for controlling from a first workstation print-jobs in a print queue on a second workstation, the print jobs being intended for a printing device directly coupled to the second workstation, and the first and second workstations communicating over a computer network, the system comprising; a first communication bus on the first workstation and a second communication bus on the second workstation, the first communication bus being operable to issue a print-job modification request to the second communication bus, and the second communication bus being responsive to the request to instruct the print queue to modify a print-job.

A system in accordance with this further preferred embodiment provides an advantage that a print-job residing on a workstation may be modified by a remote workstation. This allows a print-job which originated from one workstation to be altered by that workstation even though it is managed by a print queue on the destination workstation. A user who is printing from the originating workstation is thus given the impression that a remote printing device, in particular a shared printer, is locally attached.

The different aspects of the present invention are preferably implemented by communication means, preferably in the form of a "communication bus" as described below. Such a communication bus may operate by waiting to receive requests to process, either on behalf of a remote instance of itself, or on behalf of a component of a printer-driver running locally on a workstation. When the communication bus receives such a request, it will either redirect or forward the request to a remote-instance of itself, or perform the action requested locally and send the results back to the original requestor.

The communication buses are preferably embodied as a software component which allows components of a printer-driver to communicate with remote instances of itself, to exchange job or printer-state information or to query the state of remote-printers and to effect changes in the remote-printer environment.

Further advantages and features of the invention will be apparent from the following description.

Figure 1 is a block diagram of a prior art configuration of a server PC with a shared printer and a client PC.

Figure 2 is a block diagram of a configuration of a server PC with a shared printer and a client PC in accordance with the invention.

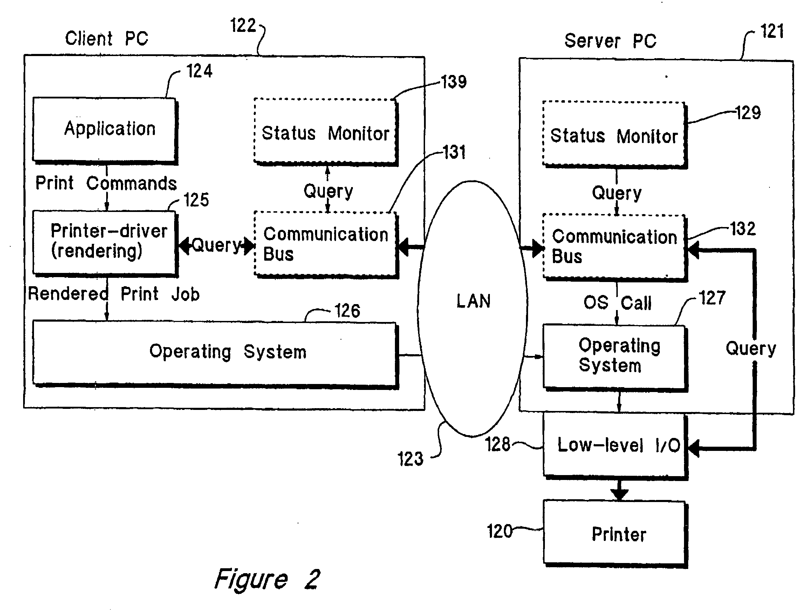

Figure 2 is a block diagram of a system in accordance with the invention. The system includes a printer 120 shared on a server workstation 121 (in this case a personal computer or PC), and a client workstation 122 (also a PC) on which a print-job is generated, and routed to the printer over a LAN 123. Each personal computer 121, 122 has a central processing unit, such as a Pentium™ processor available from Intel, USA, and an operating system, such as the Windows™ 95 or the Windows™ NT operating system available from Microsoft, USA. The printer 120 is shared by means of a print sharing facility provided by the operating system.

A print-job is initiated from an application 124 running on the client PC 122. The application 124 may be, for example, a word processing application or a spread sheet application. The application 124 issues appropriate print commands to the printer-driver 125 which include, amongst others, page layout data, text data, and graphics data. Collectively, these commands may be referred to as image data.

In order to properly render the image data, the printer driver 125 requires information about the printing characteristics or parameters of the remote printer 120. This information may include, for example, the size of ink droplets for each colour of the printer, the size and/or type of media used in the printer, or the status of the printer nozzles.

The printer driver 125 obtains this information by querying the state of the remote printer 120 via a communication bus 131. The communication bus 131 issues a forward query to a remote instance of itself on the server PC i.e. the communication bus 132. The forward query requests that the communication bus 132 perform a query to the remote printer 120 via the low level input and output module 128. After performing the query, the results are passed back from the communication bus 132 to the communication bus 131 and on to the printer driver 125.

In general, a communication bus operates to intercept requests destined for remote shared printers and forwards the requests to the remote machine where a local query to the shared printer can then take place. The communication bus allows remote printers that have been shared in the Windows™ 95 environment to be treated as though there were attached locally by enabling full two-way communications with them.

One of the main uses of the communication bus by a printer-driver is to query the size of ink-droplets in a remote shared printer, which will vary from printer to printer depending on manufacturing tolerances. The size of the ink-droplets of a particular printer affects the hue or tint of colours produced by that printer. For example, if a printer has larger cyan-droplets than magenta ones, then the number of cyan ink-drops will need to be compensated (i.e. reduced) slightly to offset its relatively larger size, in order to ensure accurate colour reproduction.

Printer drivers that need an accurate value for the size of a printer's ink-drops need to query for this information prior to deciding how many drops of each colour to use to achieve a desired shade. For example, green is typically achieved by using a mixture of cyan and yellow. The proportions of cyan to yellow will be affected by the size of cyan relative to yellow ink-drops.

The system incorporating the communication bus allows the correct values of the ink-drop sizes to be obtained by the printer-driver each time in the shared PC configuration leading to consistently accurate colour-reproduction.

Prior to rendering a print-job, a print-driver can use the communication buses 131, 132 to query the kind of paper loaded in the remote-printer. The results of the query are used to affect the rendering of a print-job, depending on the kind of paper present. For example, if transparencies were detected, certain types of ink may be excluded from the print-job due to incompatibilities between the type of ink present in the printer and the transparency.

Modem ink-jets feature print heads with many tens or even hundreds of minute ink-nozzles. Depending on how heavily the print head is used, it is common for a small number of nozzles to be clogged. This clogging can be detected by the printer. In accordance with the present invention, the clogging of the nozzles is compensated for by shingling in a known way the printout by alternating the nozzles used. This shingling effectively distributes the missing dots randomly instead of leaving a missing streak in the printout. The shingling instructions are determined in the printer driver 125 in dependence on queried nozzle status. The instructions are thus recorded in the print data of the print job.

A printer-driver can detect, using the communication buses, exactly which nozzles are clogged and can issue commands in the print-data to modify the shingling pattern accordingly. The modified shingling pattern favours the configuration of available nozzles of the remote-printer. This leads to improved appearance of printouts.

In summary, in dependence on the queried printer parameters, the printer driver 125 renders the image data into print data suitable for interpreting by the remote printer 120. The printer driver 125 negotiates with the operating system 126 of the client PC 122 to establish a network connection with the operating system 127 of the server PC 121 over the LAN 123. The rendered print job is then sent over this network connection to the remote printer 120 attached to the server PC 121 via its operating system 127 and low-level input/output module 128.

Other properties which do not influence the print rendering process can be queried in the remote printer 125. These include ink-levels in the ink reservoirs, error-conditions and other variables recorded by the printer for monitoring its state.

Software components, such as a status monitor 139, run independently of the printer driver 125 and can query the remote-printer by calling or querying the communication bus 131.

The communication bus is used to pass on events that occur on a remote printer to each client PC that has registered to receive those events. Examples of such events include: paper-out, ink-low, job-finished etc. Events that have been passed on to a client PC are shown to the user at the PC. Each error or event is reported as it happens on the remote-printer as though it was locally or directly attached.

The communication bus 132 communicates to the remote communication bus 131 to exchange print-job information such as the title of a print-job, its owner and when it was submitted. It can make this information available to printer-drivers or other applications executing remotely, giving a consistent view of the list of outstanding and completed jobs on the server PC.

The communication bus 132 can also be used to notify the remote communication bus 131 of error conditions or events occurring on its local printer 120. Notification is selective as a result of maintaining a list of communicating buses and forwarding events or error-codes only to those communication buses that have registered to receive those events.

The communication bus 132 is also used for basic print-job control on a system. It can direct the local print-spooler on behalf of remote instances of itself, such as cancelling a print-job or merely enumerating the list of current jobs by calling operating-system functions that control the print-spooler on behalf of remote processes.

The communication bus 132 can be called by a remote instance of itself to perform or execute an action, such as launching a program, or making a system-call that affects the state of a remote machine. Effectively, it behaves like a proxy for the remote instance, controlling various aspects of the remote workstation such as print-job queues and the launching of various components of the printer-driver without requiring user-interaction.

Print-jobs could be rendered remotely, by using a communication bus to transfer the entire contents of a print-job to a remote printer-driver. This would allow the heavy-processing to be offloaded to a larger server PC away from a user's client PC for better performance.

## Claims

1. A method for printing from a first workstation (122) to a printing device (120) directly coupled to a second workstation (121), the first and second workstations (122, 121) communicating over a computer network (123), the method comprising;
receiving on the first workstation (122) image data from an application (124) operating on the first workstation (122),
issuing a request from the first workstation (122) to the second workstation (121) to query the printing device (120) for printing parameter information,
returning the queried parameter information from the second workstation (121) to the first workstation (122),
rendering (125), on the first workstation (122), the image data in dependence on the parameter information into print data suitable for interpreting by the printer device (120), and
sending the print data to the printing device (120) via the second workstation (121).

2. A method according to claim 1 further comprising the step of notifying events on the printing device (120) to other workstations, in the computer network, the method comprising;
registering workstations with the second workstation to make the printing device available for printing from the registered workstations,
maintaining on the second workstation a list of the registered workstations, and notifying events on the printing device only to the registered workstations.

3. A system for printing from a first workstation (122) to a printing device (120) directly coupled to a second workstation (121), the first and second workstations (122, 121) communicating over a computer network (123), the system comprising;
a first communication means (131) on the first workstation (122) and a second communication means (132) on the second workstation (121), the first communication means (131) being operable to issue a query request to the second communication means (132), and the second communication means (132) being responsive to the request to query the printing device (120) for printing parameter information and to send the parameter information to the first communication means (131), rendering means (125) coupled to the first communication means (131) for receiving parameter information of the printing device (120), the rendering means (125) being operable to receive image data from an application (124) operating on the first workstation (122) and render the image data in dependence on the parameter information into print data suitable for interpreting by the printing device (120), and
an operating system (126) for sending the print data to the printing device (120) via the second workstation (121).

4. A system as claimed in claim 3, wherein the system includes means for controlling from the first workstation (122) print-jobs in a print queue on the second workstation (121), the print jobs being intended for the printing device (120) directly coupled to the second workstation (121),
wherein the first communication means (131) is operable to issue a print-job modification request to the second communication means (132) and the second communication means (132) being responsive to the request to instruct the print queue to modify a print-job.

## Patentansprüche

1. Ein Verfahren zum Drucken von einem ersten Arbeitsplatzrechner (122) zu einem Druckgerät (120), das direkt mit einem zweiten Arbeitsplatzrechner (121) gekoppelt ist, wobei der erste und der zweite Arbeitsplatzrechner (122, 121) über ein Computernetzwerk (123) kommunizieren, wobei das Verfahren folgende Schritte aufweist:
Empfangen von Bilddaten an dem ersten Arbeitsplatzrechner (122) von einer Anwendung (124), die an dem ersten Arbeitsplatzrechner (122) wirksam ist;
Erteilen einer Aufforderung von dem ersten Arbeitsplatzrechner (122) zu dem zweiten Arbeitsplatzrechner (121), um das Druckgerät (120) auf Druckparameterinformationen hin abzufragen;
Rückgeben der abgefragten Parameterinformationen von dem zweiten Arbeitsplatzrechner (121) zu dem ersten Arbeitsplatzrechner (122);
Aufbereiten (125) der Bilddaten an dem ersten Arbeitsplatzrechner (122) in Abhängigkeit von den Parameterinformationen in Druckdaten, die zu einem Interpretieren durch das Druckgerät (120) geeignet sind; und
Senden der Druckdaten über den zweiten Arbeitsplatzrechner (121) zu dem Druckgerät (120).

2. Ein Verfahren gemäß Anspruch 1, das ferner den Schritt eines Mitteilens von Ereignissen an dem Druckgerät (120) an andere Arbeitsplatzrechner in dem Computernetzwerk aufweist, wobei das Verfahren folgende Schritte aufweist:
Registrieren von Arbeitsplatzrechnern bei dem zweiten Arbeitsplatzrechner, um das Druckgerät zu einem Drukken von den registrierten Arbeitsplatzrechnern aus verfügbar zu machen;
Beibehalten einer Liste der registrierten Arbeitsplatzrechner bei dem zweiten Arbeitsplatzrechner und Mitteilen von Ereignissen an dem Druckgerät lediglich an die registrierten Arbeitsplatzrechner.

3. Ein System zum Drucken von einem ersten Arbeitsplatzrechner (122) zu einem Druckgerät (120), das direkt mit einem zweiten Arbeitsplatzrechner (121) gekoppelt ist, wobei der erste und der zweite Arbeitsplatzrechner (122, 121) über ein Computernetzwerk (123) kommunizieren, wobei das System folgende Merkmale aufweist:
eine erste Kommunikationseinrichtung (131) an dem ersten Arbeitsplatzrechner (122) und eine zweite Kommunikationseinrichtung (132) an dem zweiten Arbeitsplatzrechner (121), wobei die erste Kommunikationseinrichtung (131) betreibbar ist, um eine Abfrageaufforderung an die zweite Kommunikationseinrichtung (132) zu erteilen, und die zweite Kommunikationseinrichtung (132) auf die Aufforderung anspricht, um das Druckgerät (120) auf Druckparameterinformationen hin abzufragen und die Parameterinformationen zu der ersten Kommunikationseinrichtung (131) zu senden, eine Aufbereitungseinrichtung (125), die mit der ersten Kommunikationseinrichtung (131) gekoppelt ist, zu einem Empfangen von Parameterinformationen des Druckgeräts (120), wobei die Aufbereitungseinrichtung (125) betreibbar ist, um Bilddaten von einer Anwendung (124) zu empfangen, die an dem ersten Arbeitsplatzrechner (122) wirksam ist, und die Bilddaten in Abhängigkeit von den Parameterinformationen in Druckdaten aufzubereiten, die zu einem Interpretieren durch das Druckgerät (120) geeignet sind, und
ein Betriebssystem (126) zu einem Senden der Druckdaten über den zweiten Arbeitsplatzrechner (121) zu dem Druckgerät (120).

4. System gemäß Anspruch 3, wobei das System eine Einrichtung zum Steuern von Druckaufträgen in einer Druckwarteschlange an dem zweiten Arbeitsplatzrechner (121) von dem ersten Arbeitsplatzrechner (122) aus umfaßt, wobei die Druckaufträge für das Druckgerät (120) vorgesehen sind, das direkt mit dem zweiten Arbeitsplatzrechner (121) gekoppelt ist,
wobei die erste Kommunikationseinrichtung (131) betreibbar ist, um der zweiten Kommunikationseinrichtung (132) eine Druckauftragsmodifikationsaufforderung zu erteilen, und die zweite Kommunikationseinrichtung (132) auf die Aufforderung anspricht, um die Druckwarteschlange anzuweisen, einen Druckauftrag zu modifizieren.

## Revendications

1. Un procédé d'impression à partir d'une première station de travail (122) sur un dispositif d'impression (120) couplé directement à une deuxième station de travail (121), la première et la deuxième stations de travail (122, 121) communiquant par l'intermédiaire d'un réseau informatique (123), le procédé comprenant les étapes consistant à:
recevoir, sur la première station de travail (122), des données d'image provenant d'une application (124) en fonctionnement sur la première station de travail (122),
émettre de la première station de travail (122) à la deuxième station de travail (121) une demande d'interrogation au dispositif d'impression (12C) concernant une information de paramètres d'impression,
renvoyer de la deuxième station de travail (121) à la première station de travail (122) l'information de paramètres qui répond à l'interrogation,
restituer (125) en fonction de l'information de paramètres, sur la première station de travail (122), les données d'image sous forme de données d'impression aptes à être interprétées par le dispositif d'imprimante (120), et
envoyer les données d'impression au dispositif d'impression (120) par l'intermédiaire de la deuxième station de travail (121).

2. Un procédé selon la revendication 1 qui comprend en outre l'étape consistant à notifier des événements survenant sur le dispositif d'impression (120) à d'autres stations de travail du réseau informatique, le procédé comprenant les étapes consistant à:
enregistrer des stations de travail à la deuxième station de travail pour rendre le dispositif d'impression disponible pour impression à partir des stations de travail enregistrées,
maintenir sur la deuxième station de travail une liste des stations de travail enregistrées, et ne notifier des événements survenant sur le dispositif d'impression qu'aux stations de travail enregistrées,

3. Un système d'impression à partir d'une première station de travail (122) sur un dispositif d'impression (120) couplé directement à une deuxième station de travail (121), la première et le deuxième stations de travail (122, 121) communiquant par l'intermédiaire d'un réseau informatique (123), le système comprenant:
un premier moyen de communication (131) sur la première station de travail (122) et un deuxième moyen de communication (132) sur la deuxième station de travail (121), le premier moyen de communication (131) pouvant intervenir pour émettre une demande d'interrogation vers le deuxième moyen de communication (132), et le deuxième moyen de communication (132) répondant à la demande en interrogeant le dispositif d'impression (120) quant à une information de paramètres d'impression et en envoyant l'information de paramètres au premier moyen de communication (131), un moyen de restitution (125) couplé au premier moyen de communication (131) pour recevoir l'information de paramètres provenant du dispositif d'impression (120), le moyen de restitution (125) pouvant intervenir pour recevoir des données d'image provenant d'une application (124) en fonctionnement sur la première station de travail (122) et pour restituer, en fonction de l'information de paramètres, les données d'image sous forme de données d'impression aptes à être interprétées par le dispositif d'impression (120), et
un système d'exploitation (126) pour envoyer les données d'impression au dispositif d'impression (120) par l'intermédiaire de la deuxième station de travail (121).

4. Un système selon la revendication 3, dans lequel le système inclut un moyen de commande, par la première station de travail (122), de tâches d'impression dans une file d'attente d'impression sur la deuxième station de travail (121), les tâches d'impression étant prévues pour le dispositif d'impression (120) couplé directement à la deuxième station de travail (121),
dans lequel le premier moyen de communication (131) peut intervenir pour émettre vers le deuxième moyen de communication (132) une demande de modification d'une tâche d'impression, et le deuxième moyen de communication (132) répond à la demande en en voyant à la file d'attente d'improssion une instruction de modification d'une tâche d'impression.
